# FASCICULE DE BREVET EUROPEEN

(11) **EP 1 705 604 B1**
(45) Date de publication et mention de la délivrance du brevet: **23.09.2009**
(21) Numéro de dépôt: 06111387.4
(22) Date de dépôt: 20.03.2006
(51) Int. Cl.: G06K 19/07

(54) **Méthode et dispositif de démodulation multiniveaux**
Verfahren und Vorrichtung zur Demodulation in mehreren Stufen
Multilevel demodulation method and device

(30) Priorité: 21.03.2005 FR 0550727
(43) Date de publication de la demande: 27.09.2006
(73) Titulaire: COMMISSARIAT A L'ENERGIE ATOMIQUE, 75015 Paris (FR)
(72) Inventeur: Robert, Gérard, Poisat 38320 (FR); Dehmas, François, Meylan 38240 (FR); Crochon, Elisabeth, Poisat 38320 (FR); Reverdy, Jacques, Crolles 38920 (FR)
(74) Mandataire: Poulin, Gérard

(56) Documents cités:
- FR-A- 2 853 479
- FR-A- 2 859 842
- US-A- 5 825 243
- US-B1- 6 173 018
- PATENT ABSTRACTS OF JAPAN vol. 1995, no. 08, 29 septembre 1995 (1995-09-29) & JP 07 123121 A (SHINKO ELECTRIC CO LTD; others: 01), 12 mai 1995 (1995-05-12)

## Description

### DOMAINE TECHNIQUE ET ART ANTÉRIEUR

L'invention concerne les techniques d'échanges d'informations entre une station fixe (lecteur) et un transpondeur sans contact (carte, étiquette) placé dans le champ électromagnétique émis par le lecteur.

Plus précisément, l'invention concerne une méthode de démodulation dans le transpondeur de la modulation émise par le lecteur.

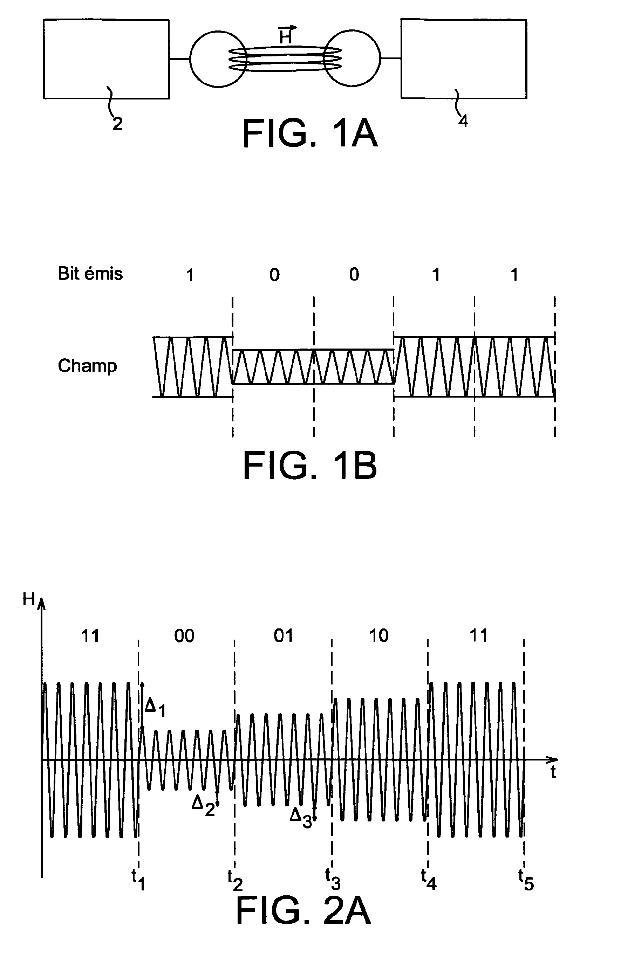

Comme illustré sur la figure 1A, un lecteur 2 émet un champ magnétique radio fréquence, ce champ est utilisé d'une part par un transpondeur 4 pour créer sa tension d'alimentation et d'autre part pour échanger des informations. Classiquement, le lecteur 2 envoie ses informations en modulant en amplitude ce champ magnétique (Amplitude Shift Keying ou ASK).

La figure 1B représente le champ émis par une station fixe en fonction de la valeur du bit qu'elle souhaite transmettre.

Pour augmenter le débit d'informations échangées entre la station fixe 2 et le transpondeur 4, on peut soit augmenter la fréquence du signal modulant soit augmenter le nombre de niveaux d'amplitude de modulation.

Dans la demande de brevet n° 03 10928, publiée sous le numéro FR 2 859 842 A est décrite une méthode de démodulation multi-niveaux mettant en oeuvre un convertisseur analogique numérique à un bit avec une forte résolution temporelle.

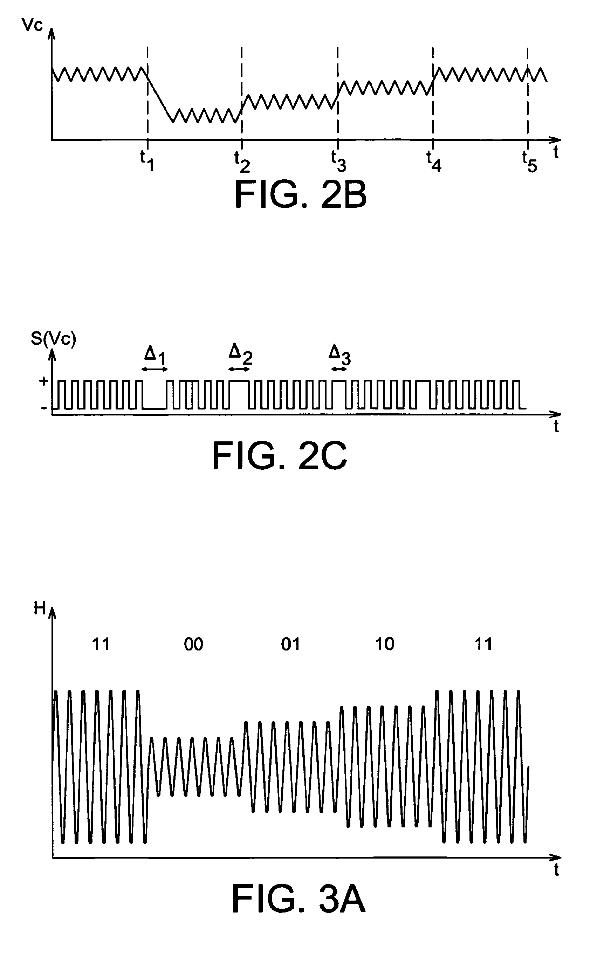

Les figures 2A - 2C rappellent sommairement le fonctionnement de ce convertisseur 1 bit décrit dans ce document n° FR 03 10928. Sur ces figures:
- H représente le champ modulé par le lecteur (figure 2A),
- V_{c} est la tension de commande fournie par l'intégrateur du transpondeur 4 (figure 2B), l'amplitude de cette tension est représentative du niveau de l'amplitude du champ magnétique H, et donc des données à transmettre ;
- S(V_{c}) est le signe de la variation de la tension de commande V_{c} d'une boucle de régulation du transpondeur (figure 2C).

Le signal signe S(V_{c}) est le signal exploité pour retrouver l'information émise par la station fixe 2.

Dans cette méthode on utilise le sens de variation de la tension d'asservissement d'un convertisseur analogique/digital (démodulateur du transpondeur 4) pour connaître le niveau de la modulation.

La longueur des séquences de bits S(V_{c}) identiques est comparée à des seuils ce qui permet d'obtenir l'information relative à la valeur de la différence entre le niveau de modulation actuel et le niveau précédent.

Dans cette méthode, le rapport signal à bruit est trop élevé et la lecture des transpondeurs ne peut se faire que dans une zone de champ très réduite.

Il se pose donc le problème de trouver un nouveau dispositif et un nouveau procédé permettant de résoudre ces problèmes de sensibilité et de portée.

Le document Patent Abstracts of Japan, publié sous le n° 07123121 le 12 mai 1995 décrit un système de démodulation.

Le document FR 2 853 479 décrit un dispositif de télétransmission par couplage inductif à modulation multi-niveaux.

### EXPOSÉ DE L'INVENTION

L'invention propose une méthode pour démoduler un signal modulé en amplitude par un lecteur et envoyé vers un transpondeur, dans le cas où le nombre de niveaux N est supérieur ou égal à 2.

L'invention concerne d'abord un procédé de démodulation d'une information émise par modulation d'amplitude par un lecteur vers un transpondeur, selon la revendication 1.

Selon l'invention, on peut mémoriser dans des moyens de mémorisation, ou dans une table de référence de seuil, par exemple une table de référence d'un comparateur, non pas des valeurs théoriques de ces seuils, mais des valeurs adaptées au dispositif utilisé et permettant de corriger les non linéarités dues aux différences de saut d'un niveau à l'autre.

Il est possible, avant chaque envoi de signal du lecteur au transpondeur, d'envoyer un préambule contenant tous les sauts possibles pour tous les niveaux de modulation afin d'établir les valeurs des seuils.

Au cours d'une étape antérieure, on peut établir les seuils ; on envoie par exemple un signal comportant tous les sauts possibles, le transpondeur mesure les valeurs correspondantes, et on peut établir une bijection entre l'ensemble des sauts réels, pour tous les niveaux, et l'ensemble des valeurs des seuils, qui seront stockées dans la table de référence.

Par exemple pour 4 niveaux, il y a 6 seuils possibles (-3, -2, -1, +1, +2, +3). Théoriquement, tous ces seuils sont identiques pour chaque niveau. Or la réalité est toute autre : pour des raisons de non linéarité du système, les seuils varient d'un niveau à l'autre ; autrement dit, le déplacement +1 à partir d'un premier niveau, par exemple le niveau 2, n'a pas nécessairement la même amplitude que le déplacement +1 à partir d'un deuxième niveau, par exemple le niveau 0. Il en résulte des erreurs lors de la démodulation.

On cherche donc à connaître les valeurs réelles de tous les sauts possibles pour déterminer les seuils réels.

Par exemple dans le cas de 4 niveaux, la table ne comprendra alors plus 6 seuils mais 24 valeurs (6 valeurs par niveau).

De plus, tous les déplacements ne sont pas permis. Par exemple, toujours pour 4 niveaux, si le symbole précédent est le niveau 1, seuls sont permis les déplacements -1, +1, +2. Il y aura donc dans la table de référence des valeurs interdites.

L'invention concerne donc également un procédé de démodulation d'une information émise par modulation d'amplitude par un lecteur vers un transpondeur, par exemple une carte ou une étiquette RFID, comportant une étape de comparaison, à des valeurs seuil, des variations d'une tension d'asservissement d'un démodulateur et comportant une étape préalable de mesure physique de la valeur de ces seuils.

L'invention concerne aussi un dispositif de démodulation d'une information émise par modulation d'amplitude par un lecteur vers un transpondeur, tel qu'une étiquette RFID, selon la revendication 4.

Il peut en outre comporter des moyens formant antenne, des moyens d'impédance de charge aux bornes de l'antenne, et des moyens formant boucle de régulation d'une tension aux bornes de l'impédance de charge.

Les moyens formant régulation peuvent, selon un mode de réalisation, comporter des moyens de redressement de la tension aux bornes de l'antenne, et des moyens de commande pour modifier l'impédance en fonction de la sortie des moyens de redressement.

Des moyens de démodulation peuvent comporter des moyens de conversion analogique-numérique, entre les moyens de commande et les moyens de redressement.

### BREVE DESCRIPTION DES FIGURES

- Les figures 1A et 1B représentent un système lecteur - transpondeur, ainsi que le champ émis par une station fixe en fonction de la valeur du bit qu'elle souhaite transmettre,
- les figures 2A - 2C illustrent une technique de démodulation,
- les figures 3A et 3B illustrent une suite de symboles et des niveaux de modulation correspondants,
- la figure 4 représente diverses étapes d'un procédé selon l'invention,
- les figures 5A - 5B illustrent un dispositif selon l'invention,
- la figure 6 représente un exemple de préambule,
- la figure 7 représente des signaux obtenus à diverses étapes de traitement selon l'invention,
- les figures 8 et 9 représentent, selon l'invention, un système à 4 niveaux et des résultats de comparaison de sortie d'un filtre et de seuils.

### EXPOSÉ DÉTAILLÉ DE MODES DE RÉALISATION PARTICULIERS

Pour plus de clarté, on précise qu'on utilise le vocabulaire suivant :
- les symboles utilisés : ils sont en nombre lié au nombre de bits émis simultanément par la station de base 2 (figure 1A) ; si ce nombre de bits est N, il faut 2^{N} symboles différents,
- le niveau de modulation est la valeur crête du champ électromagnétique émis par le lecteur 2. Il faut au minimum autant de niveaux de modulation que de symboles différents. Le niveau de modulation est codé de (2^{N} -1) à 0,
- le saut est un nombre signé (+d, ou -d, d entier naturel) indiquant la différence entre le niveau de modulation du symbole Tₙ et celui du symbole T₍ₙ₊₁₎.
- le durée d'un symbole est le temps de transfert d'un symbole entre le lecteur et le transpondeur.

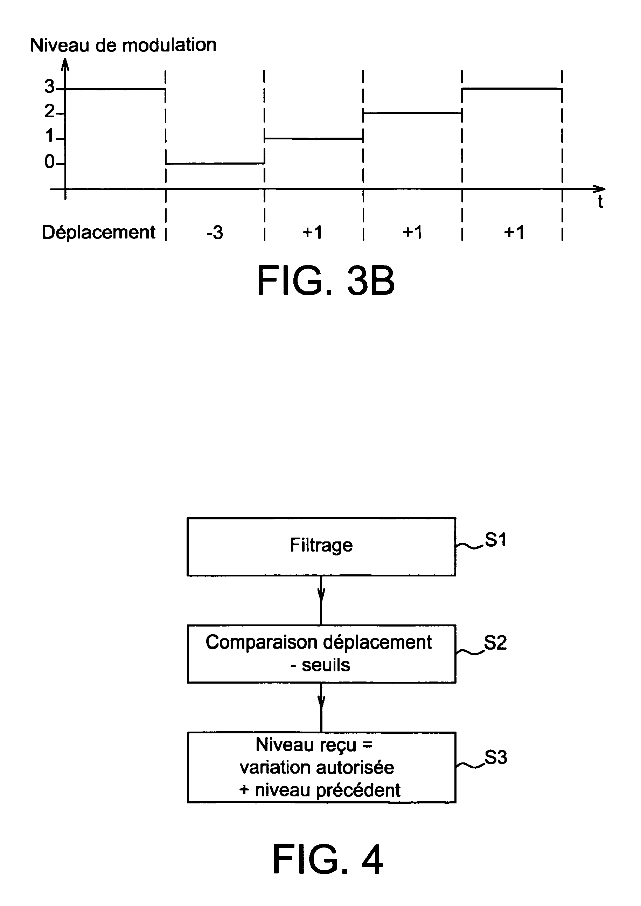

Les figures 3A et 3B illustrent ces rappels pour un symbole constitué de 2 bits ; on utilise alors 4 niveaux différents de modulation.

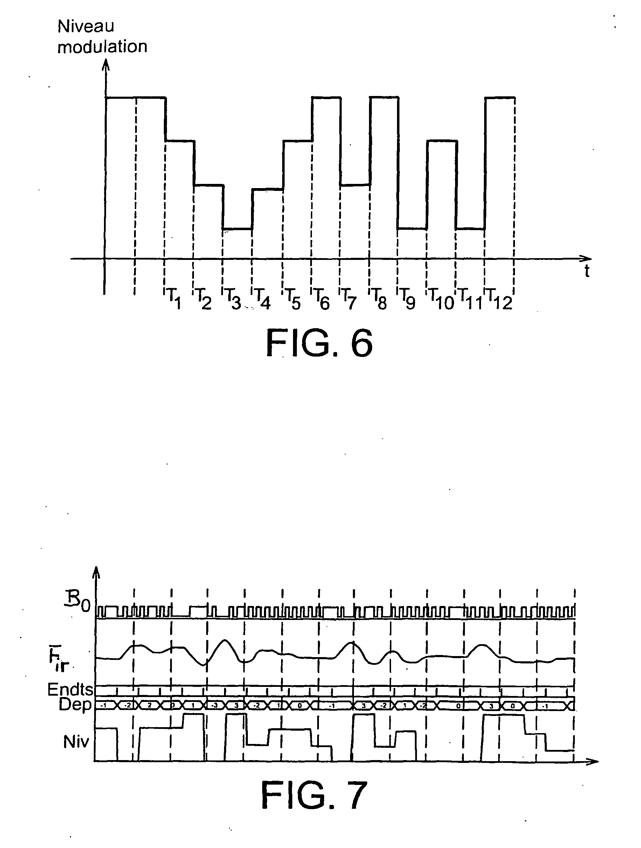

Selon l'invention, tout déplacement ou saut possible à partir de chaque niveau de modulation est préalablement répertorié et mémorisé, par exemple à l'aide d'un signal dit préambule (dont un exemple est donné plus loin en liaison avec la figure 6) et qui contient tous les sauts possibles à partir de chaque niveau de modulation.

On identifie donc les niveaux réels de variation, ou les sauts réels, à partir de chaque niveau de modulation, et on affecte à chacun de ces sauts réels une valeur de seuil

Aux sauts mesurés positifs (respectivement négatifs) hors de la gamme des sauts possibles, on affecte la plus grande (respectivement la plus petite) valeur autorisée de saut.

Un procédé de démodulation selon l'invention est par exemple celui illustré en figure 4:
a) On procède d'abord à un filtrage passe - bas du signal signe V_{c} (étape S1), ce signal signe étant représenté en exemple sur la figure 2C,
b) on compare chaque valeur du signal filtré à des seuils pour déterminer la variation de champ détecté (étape S2),
c) on calcule le niveau reçu à partir de la variation du saut et du niveau précédent (étape S3).

Selon l'invention, un procédé de démodulation d'une information émise par modulation d'amplitude d'un signal par un lecteur vers un transpondeur, peut donc comporter:
- pour chaque saut à partir d'un niveau donné de ladite modulation, l'identification des valeurs de variation possibles à partir de ce niveau,
- la détermination du saut puis le calcul du nouveau niveau de modulation en fonction du niveau de modulation antérieur et de la valeur du saut.

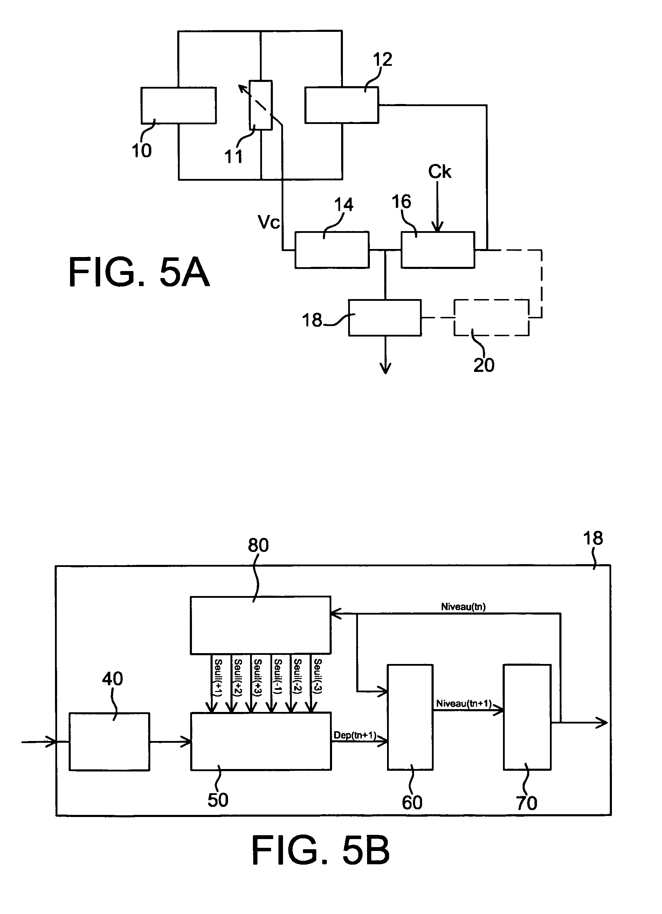

Un procédé selon l'invention peut être implémenté dans un transpondeur de manière numérique, par exemple à l'aide d'un filtre, la sortie du filtre étant envoyée à un dispositif tel que par exemple celui illustré en figure 5B.

La figure 5A représente une partie du dispositif 4 transpondeur, comportant des moyens 10 formant antenne de réception, des moyens 12 formant circuit de redressement, des moyens 16 formant convertisseur analogique - numérique, et des moyens 14 de commande.

Ces derniers produisent une tension de commande d'une impédance de charge 11.

Un circuit 18 de traitement numérique fournit des signaux numériques représentatifs des données transmises.

Le convertisseur 16 à n bits est situé dans la boucle de régulation, entre les moyens 12 de redressement et les moyens 14 de commande. Le convertisseur 16 est, de préférence, un convertisseur à un bit (n=1), qui peut comporter un simple comparateur. Une très faible résolution est ainsi obtenue, qui permet de réduire au minimum le nombre de composants, et qui est compensée par une forte résolution dans le temps, obtenue en cadençant le convertisseur 16 à une fréquence de sur-échantillonnage très supérieure à la fréquence des données transmises par la station fixe 2.

La fréquence de sur- échantillonnage est par exemple déterminée par un circuit d'horloge fournissant des signaux d'horloge Cₖ à une entrée de cadencement du convertisseur 16. A titre d'exemple, pour une fréquence de données de l'ordre de 200kHz, la fréquence de sur-échantillonage peut avantageusement être comprise entre 10 et 20MHz.

Bien que les signaux numériques de sortie du convertisseur 16 contiennent les informations nécessaires à la récupération des données transmises par la station fixe 2, ces signaux numériques ne sont pas directement exploitables.

La sortie du convertisseur 16, connectée au circuit de commande 14, est donc connectée à l'entrée d'un circuit de traitement numérique 18 destiné à fournir, sur N bits, les données démodulées.

Le fonctionnement du circuit de démodulation de l'objet portatif de la figure 5A, est illustré par les signaux représenté sur les figures 2A et 2B, dans le cas où le convertisseur analogique-numérique 16, basse résolution, inclus dans la boucle de régulation de la tension alternative Vac aux bornes de l'antenne 10, est constitué par un simple comparateur fournissant une suite de bits à la fréquence de sur-échantillonage. Le circuit de commande 14 comporte un intégrateur fournissant un signal de tension analogique Vc représentatif des signaux de sortie, à n bits, du convertisseur 16.

Par exemple, ce signal a la forme d'une rampe de tension montante lorsque la sortie des moyens 16 est à 1 et d'une rampe de tension descendante lorsque cette sortie est à zéro. La tension de commande V_{c}, obtenue en sortie des moyens de commande 14, n'est donc jamais statique. Ainsi, après une période transitoire, lorsque la boucle de régulation est en position d'équilibre, la tension de commande Vc a la forme d'un signal en dents de scie autour d'un niveau moyen (voir figure 2B) proportionnel au niveau de la force électromotrice, c'est-à-dire proportionnel au niveau du champ magnétique émis par la station fixe 2 et, en conséquence, représentatif des données transmises par cette station fixe 2.

Dans l'exemple illustré en figures 2A - 2B, le champ magnétique H varie entre les instants t₀ et t₅ Le changement de niveau de l'amplitude de ce champ H provoque un changement de niveau de la force électromotrice et, en conséquence, une variation rapide (décroissante à l'instant t₁ et croissante aux instants t₂, t₃ et t₄) de la tension alternative V_{ac} générée aux bornes de l'antenne 10 et de l'impédance de charge 11.

Dans cet exemple, une diminution du niveau du champ magnétique H entraîne l'émission d'une séquence de zéros consécutifs plus longue que lors de l'asservissement, provoquant une diminution de l'amplitude moyenne de la tension de commande V_{c}. De manière analogue, une augmentation du niveau du champ magnétique émis se traduit par l'émission d'une séquence de « 1 » consécutifs, plus longue que lors de l'asservissement, provoquant une augmentation de l'amplitude moyenne de la tension de commande V_{c}. Le nombre de O ou de 1 consécutifs croît avec l'amplitude du saut de la force électromotrice.

Les signaux numériques de sortie du convertisseur 16 contiennent donc une information représentative du signe et de l'amplitude de la variation du niveau de la fem générée par le champ H, autrement dit une information représentative de la dérivée de l'enveloppe de la force électromotrice ou du champ magnétique. Le circuit de traitement numérique 18 comporte donc au moins une fonction d'intégration numérique. Les fonctions d'intégration du circuit de commande 14 et/ou du circuit de traitement numérique 18 peuvent être réalisées au moyen d'intégrateurs et/ou de filtres passe - bas.

Ainsi, la boucle de régulation de la figure 5A assure simultanément une partie de la conversion analogique, ce qui rend l'ensemble plus compact. De plus l'effet de variations lentes éventuelles du niveau de champ magnétique moyen, dues à un mouvement de l'objet portatif 1, est atténué par le fait que l'information de sortie du convertisseur 16 est représentative de la dérivée de l'enveloppe du champ magnétique. Les variations lentes du niveau de champ moyen sont donc traitées comme du bruit et ne perturbent pas la démodulation.

La figure 5B donne un exemple de réalisation d'un dispositif selon l'invention, pour une démodulation multi-niveaux exploitant le calcul des seuils de déplacement pour chaque niveau.

Un tel dispositif comporte des moyens 50 comparateurs, pour comparer la sortie du filtre 40 (lequel est situé à l'entrée du bloc 18 de traitement numérique, figure 5B) avec des valeurs seuils issues d'une table 80 de seuil.

Cette table de seuil est par exemple alimentée lors d'une phase ou de préambule qui comporte tous les déplacements possibles, comme illustré sur la figure 6. A l'ensemble de ces déplacements possibles est associé l'ensemble des déplacements corrigés ou autorisés.

Les moyens 60 sont des moyens additionneurs, tandis que la référence 70 désigne un registre.

En fonctionnement, la fréquence de travail est la fréquence symbole. A l'instant tₙ₊₁, la table seuil 80 est adressée par la valeur du niveau de modulation pendant le temps tₙ. Cette valeur donne donc le niveau de modulation qui a été précédemment calculé pour l'instant tₙ.

Par ailleurs, la sortie du filtre 40 est comparée aux seuils contenus dans la table 80, et la sortie du comparateur 50 donne le saut dep (tₙ₊₁) suivant la logique décrite ci-dessus. Ce saut est additionné au niveau niveau (tₙ) pour donner le niveau reçu au temps tₙ₊₁.

La figure 7 illustre les signaux obtenus à chaque étape du traitement :
- B₀ représente le signal en sortie du convertisseur 16,
- Fir représente la sortie du filtre,
- Endts représente la durée du symbole,
- Dep représente la variation de champ détectée,
- Niv représente le champ détecté par le transpondeur.

A chaque impulsion Endts, représentant la fréquence symbole, la sortie du filtre Fir est comparée aux seuils. On obtient alors les sauts Dep d'où on déduit le niveau de modulation Niv.

Un exemple va illustrer ce procédé.

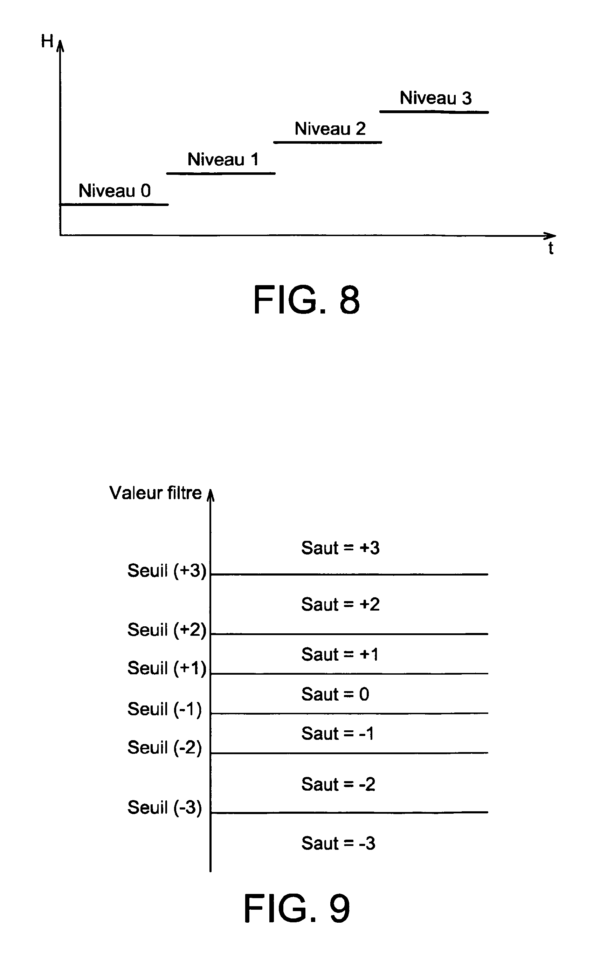

Cet exemple concerne une modulation à 4 niveaux, notés de 0 à 3, et représentés schématiquement sur les figures 8 et 9.

Les déplacements relatifs, ou sauts, possibles, à partir des différents niveaux sont :
- à partir du Niveau 0 : +1 (niveau 0 => 1), +2 (niveau 0 => 2), +3 (niveau 0 => 3),
- à partir du Niveau 1 : +1 (niveau 1 => 2), +2 (niveau 1 => 3), -1 (niveau 1 => 0),
- à partir du Niveau 2 : +1 (niveau 2 => 3), -1 (niveau 2 => 1), -2 (niveau 2 => 0),
- à partir du Niveau 3 : -1 (niveau 3 => 2), -2 (niveau 3 => 1), -3 (niveau 3 => 0).

A priori, pour une modulation à 4 niveaux seuls 6 seuils sont nécessaires (+1,+2,+3,-1,-2,-3). En comparant la sortie du filtre à ces 6 niveaux et en connaissant le niveau précédent, on peut calculer le nouveau niveau de modulation et donc la valeur du symbole émis par le lecteur.

Le saut peut être calculé de la manière suivante :
- si filtre > seuil(+3) alors saut = +3 ;
- sinon, si seuil(+3) > filtre > seuil(+2) alors saut = +2 ;
- sinon, si seuil(+2) > filtre > seuil(+1) alors saut = +1 ;
- sinon, si seuil(+1) > filtre > seuil(-1) alors saut = 0 ;
- sinon, si seuil(-1) > filtre > seuil(-2) alors saut = -1 ;
- sinon, si seuil(-2) > filtre > seuil(-3) alors saut = -2 ;
- sinon : saut = -3.

Comme déjà expliqué ci-dessus, les seuils, pour chaque niveau, ne sont pas identiques, ni nécessairement linéairement répartis, et le convertisseur dans le transpondeur n'est pas parfaitement linéaire. D'autre part, on ne prend pas en compte le fait que chaque niveau n'a que 3 sauts possibles (+ le saut nul).

Comme expliqué ci-dessus, selon l'invention, pour pallier les défauts de non linéarité, on peut calculer préalablement, pour chaque niveau, ses propres seuils de sauts autorisés.

Une transaction entre le lecteur 2 et le transpondeur 4 débute alors par exemple par un préambule, défini de telle manière qu'il contienne tous les sauts relatifs existants pour tous les niveaux possibles.

Pendant cette phase, le transpondeur va ainsi pouvoir définir tous les seuils de sauts réels.

La figure 6 donne un exemple de préambule, pour le cas de 4 niveaux, émis par le lecteur 2 avant une transaction, permettant d'identifier pour chaque niveau ses propres seuils de sauts réels.

Le tableau I indique, pour chaque Tᵢ le seuil(s) calculé pour le niveau (n).

**Tableau I**

| **Ti** | **Seuil(s)** | **Niveau (n)** |
|---|---|---|
| T1 | -1 | 3 |
| T2 | -1 | 2 |
| T3 | -1 | 1 |
| T4 | +1 | 0 |
| T5 | +1 | 1 |
| T6 | +1 | 2 |
| T7 | -2 | 3 |
| T8 | +2 | 1 |
| T9 | -3 | 3 |
| T10 | +2 | 0 |
| T11 | -2 | 2 |
| T12 | +3 | 0 |

On dispose ainsi d'un tableau de 12 coefficients (3 coefficients pour chacun des 4 niveaux).

Pour tenir compte des sauts interdits pour chaque niveau, ce tableau peut être complété :
- pour les sauts positifs interdits, par la plus grande valeur possible du calcul du filtre ;
- pour les sauts négatifs interdits, par la plus petite valeur possible du calcul du filtre.

On obtient alors un tableau de 24 coefficients (6 seuils pour chacun des 4 niveaux).

Seuil(Tᵢ) représente le seuil calculé ou autorisé à l'instant Tᵢ (voir Tableau I et figure 7).

L'application du procédé expliqué ci-dessus conduit donc au tableau II suivant :

**Tableau II**

| | |
|---|---|
| Seuil(+1)_niveau(0) | Seuil (t4) |
| Seuil(+2)_niveau(0) | Seuil (t10) |
| Seuil(+3)_niveau(0) | Seuil (t12) |
| Seuil(-1)_niveau(0) | -256 |
| Seuil(-2)_niveau(0) | -256 |
| Seuil(-3)_niveau(0) | -256 |
| Seuil(+1)_niveau(1) | Seuil (t5) |
| Seuil(+2)_niveau(1) | Seuil (t8) |
| Seuil(+3)_niveau(1) | +255 |
| Seuil(-1)_niveau(1) | Seuil (t3) |
| Seuil(-2)_niveau(1) | -256 |
| Seuil(-3)_niveau(1) | -256 |
| Seuil(+1)_niveau(2) | Seuil (t6) |
| Seuil(+2_niveau(2) | +255 |
| Seuil(+3)_niveau(2) | +255 |
| Seuil(-1)_niveau(2) | Seuil (t2) |
| Seuil(-2)_niveau(2) | Seuil (t1) |
| Seuil(-3)_niveau(2) | -256 |
| Seuil(+1)_niveau(3) | +255 |
| Seuil(+2)_niveau(3) | +255 |
| Seuil(+3)_niveau(3) | +255 |
| Seuil(-1)_niveau(3) | Seuil (t1) |
| Seuil(-2)_niveau(3) | Seuil (t7) |
| Seuil (-3)_niveau (3) | Seuil (t9) |

Dans le cas où le filtre est calculé sur 9 bits, les seuils à -256 (respectivement +255) sont interdits et se voient affecter le niveau minimal (respectivement maximal).

La démodulation numérique proposée permet d'utiliser efficacement la sortie d'un convertisseur sigma delta 20, positionné comme illustré sur la figure 5A (entre l'entrée du convertisseur 16 et une entrée du circuit de traitement numérique 18). Ce convertisseur permet d'augmenter la résolution de la démodulation en diminuant l'influence du bruit de quantification généré par le convertisseur 16.

En outre, dans le cas du multi-niveaux (nombre de niveaux strictement supérieur à 2), la gestion de seuils différents par niveau et la gestion (ou la correction) des sauts interdits améliorent notablement le rapport signal à bruit et augmentent la qualité de démodulation.

Un système selon l'invention a été réalisé, avec une durée symbole de 1,18 µs, 4 niveaux par symbole (soit 2 bits par symbole). Un tel système a permis de réaliser une transmission de données à 1,7 Mbits/S.

## Revendications

1. Procédé de démodulation d'une information émise par modulation d'amplitude par un lecteur (2) vers un transpondeur (4), le nombre de niveaux de modulation étant supérieur ou égal à 2, des valeurs de seuil autorisées et préalablement mémorisées étant associées à chaque niveau de modulation, comportant :
- une étape de comparaison, auxdites valeurs seuils, des variations d'une tension d'asservissement (V_{c}) du transpondeur (4), et de détermination d'une valeur de saut réel de niveau de modulation d'amplitude à partir du résultat de cette comparaison,
- une étape de sommation de ce saut à un premier niveau de modulation d'amplitude précédent pour déterminer un deuxième niveau de modulation d'amplitude.

2. Procédé selon la revendication 1, comportant, avant chaque envoi de signal du lecteur (2) au transpondeur (4), l'envoi d'un préambule contenant tous les sauts possibles pour tous les niveaux de modulation.

3. Procédé selon l'une des revendications 1 ou 2, comportant en outre, pour chaque niveau de tension d'asservissement, le calcul d'une nouvelle tension d'asservissement (V_{c}) en fonction du niveau de tension antérieur et de la valeur de variation autorisée.

4. Dispositif de démodulation d'une information émise par modulation d'amplitude par un lecteur vers un transpondeur, le nombre de niveaux de modulation étant supérieur ou égal à 2, **caractérisé en ce qu**'il comporte:
- des moyens (80) pour mémoriser, pour chaque niveau de ladite modulation, les valeurs de variations possibles d'un signal de tension d'asservissement du transpondeur à partir de ce niveau,
- des moyens (50, 60, 70) pour calculer, lors de chaque transition, le saut de niveau correspondant autorisé, et pour calculer le nouveau niveau de signal de tension d'asservissement en fonction d'un niveau de signal antérieur.

5. Dispositif selon la revendication 4, comportant en outre des moyens (10) formant antenne, des moyens (11) d'impédance de charge aux bornes de l'antenne, et des moyens (12, 16, 14) formant boucle de régulation d'une tension aux bornes de l'impédance de charge.

6. Dispositif selon la revendication 5, les moyens formant régulation comportant des moyens (12) de redressement de la tension aux bornes de l'antenne, et des moyens (14) de commande pour modifier l'impédance en fonction de la sortie des moyens (12) de redressement.

7. Dispositif selon la revendication 6, comportant en outre des moyens de démodulation comportant des moyens (16) de conversion analogique-numérique, entre les moyens de commande (14) et les moyens (12) de redressement.

## Claims

1. Method for demodulating information remitted by amplitude modulation by a reader (2) to a transponder (4), the number of modulation levels N being greater than or equal to 2, allowable threshold values being stored in advance and associated with each modulation level, comprising:
- a step to compare variations of a slaving Voltage (V_{c}) of the transponder (4), with said threshold values, and to determine a value of real skip of amplitude modulation level from the result of this comparison,
- a step to add this skip to a first previous amplitude modulation level to determine a second modulation amplitude level.

2. Method according to claim 1, including a step to send a preamble containing all possible skips for all modulation levels, before sending each signal from the reader (2) to the transponder (4).

3. Method according to one of claims 1 or 2, also including calculation of a new slaving voltage (V_{c}) as a function of the previous voltage level and the authorized variation value, for each slaving voltage level.

4. Device for demodulating information remitted by amplitude modulation by a reader to a transponder, the number of modulation levels N being greater than or equal to 2, **characterized in that** it comprises:
- means (80) of storing values of possible variations of a slaving voltage signal of the transponder, for each level of the said modulation, starting from this level,
- means (50, 60, 70) of calculating the corresponding allowable level skip during each transition, and of calculating the new slaving voltage signal level as a function of a previous signal level.

5. Device according to claim 4, also comprising means (10) forming an antenna, load impedance means (11) at the antenna terminals, and means (12, 16, 14) forming a voltage regulation loop at the terminals of the load impedance.

6. Device according to claim 5, the means forming regulation comprising means (12) of rectifying the voltage at the antenna terminals, and control means (14) to modify the impedance as a function of the output from the rectification means (12).

7. Device according to claim 6, also comprising demodulation means comprising analogue-digital conversion means (16) between the control means (14) and the rectification means (12).

## Patentansprüche

1. Verfahren zur Demodulation einer Information, gesendet mittels Amplitudenmodulation durch einen Leser (2) an einen Transponder (4), wobei die Anzahl der Modulationsniveaus größer als oder gleich 2 ist und jedem Madulationsniveau zulässige und vorher eingespeicherte Schwellenwerte zugeordnet sind, umfassend:
- einen Schritt zum Vergleichen der Schwankungen einer Rückkopplungs- bzw. Regelungsspannung (V_{c}) des Transponders (4) und zum Bestimmen eines reellen Werts des Amplitudenmodulationsniveau-Sprungs aufgrund des Resultats dieses Vergleichs,
- einen Schritt zum Summieren dieses Sprungs mit einem vorhergehenden ersten Amplitudenmodulationsniveau, um ein zweites Amplitudenmadulationsniveau zu bestimmten.

2. Verfahren nach Anspruch 1, das vor jedem Senden des Signals des Lesers (2) an den Transponder (4) das Senden einer alle möglichen Sprünge für alle Modulationsniveaus enthaltenden Präambel umfasst.

3. Verfahren nach einem der Ansprüche 1 oder 2, außerdem für jedes Regelungs- bzw. Rückkopplungsspannungsniveau die Berechnung einer neuen Regelungs- bzw. Rückkopplungsspannung (V_{c}) in Abhängigkeit von dem Niveau der vorhergehenden Spannung und dem zulässigen Schwankungswert.

4. Vorrichtung zur Demodulation einer Information, gesendet mittels Amplitudenmodulation durch einen Leser (2) an einen Transponder (4), wobei die Anzahl der Madulationsniveaus größer als oder gleich 2 ist,
**dadurch gekennzeichnet, dass** sie umfasst:
- Einrichtungen (80), um für jedes Niveau der genannten Modulation die aufgrund dieses Niveaus möglichen Schwankungswerte eines Regelungs- bzw. Rückkopplungsspannungssignals des Transponders einzuspeichern,
- Einrichtungen (50, 60, 70), um bei jedem Übergang den entsprechenden zulässigen Niveausprung zu berechnen und das neue Regelungs- bzw. Rückkopplungsspannungssignal zu berechnen, in Abhängigkeit von einem vorhergehenden Signalniveau.

5. Vorrichtung nach Anspruch 4, mit außerdem Antenneneinrichtungen (10), Ladungsimpedanzeinrichtungen (11) an den Anschlüssen der Antenneneinrichtungen und Regelkreiseinrichtungen (12, 16, 14) an den Anschlüssen der Ladungsimpedanzeinrichtungen.

6. Vorrichtung nach Anspruch 5, wobei die Regeleinrichtungen Gleichrichtereinrichtungen (12) der Spannung an den Anschlüssen der Antenneneinrichtungen und Steuereinrichtungen (14) zum Modifizieren der Impedanz in Abhängigkeit von dem Ausgang der Gleichrichtereinrichtungen (12) umfassen.

7. Vorrichtung nach Anspruch 6, außerdem Demodulationseinrichtungen mit Analog-Digital-Umsetzeinrichtungen (16) zwischen den Steuereinrichtungen (14) und den Gleichrichtereinrichtungen (12) umfassend.
